(19)

**Europäisches Patentamt**
**European Patent Office**
**Office européen des brevets**

(11)  **EP 2 792 006 B1**

(12)  # EUROPEAN PATENT SPECIFICATION

(45) Date of publication and mention
of the grant of the patent:
**06.06.2018  Bulletin 2018/23**

(21) Application number: **12857106.4**

(22) Date of filing: **12.12.2012**

(51) Int Cl.:
*H01M 4/58* [(2010.01)]  *H01M 4/1397* [(2010.01)]
*C01B 25/45* [(2006.01)]  *H01M 10/052* [(2010.01)]
*C01B 25/455* [(2006.01)]  *H01M 10/0525* [(2010.01)]
*H01M 4/02* [(2006.01)]  *H01M 4/04* [(2006.01)]
*H01M 4/136* [(2010.01)]  *H01M 4/36* [(2006.01)]
*H01M 4/587* [(2010.01)]

(86) International application number:
**PCT/KR2012/010788**

(87) International publication number:
**WO 2013/089426 (20.06.2013 Gazette 2013/25)**

(54)  **POSITIVE ACTIVE MATERIAL FOR RECHARGEABLE LITHIUM BATTERY**

POSITIV AKTIVES MATERIAL FÜR EINE WIEDERAUFLADBARE LITHIUMBATTERIE

MATÉRIAU ACTIF POSITIF POUR BATTERIE RECHARGEABLE AU LITHIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **12.12.2011  KR 20110133111**

(43) Date of publication of application:
**22.10.2014  Bulletin 2014/43**

(73) Proprietors:
• **Applied Materials, Inc.**
  **Santa Clara, CA 95054 (US)**
• **Industry-University Cooperation Foundation
  Hanyang University
  Seoul 133-791 (KR)**

(72) Inventors:
• **KWAK, Byung-Sung Leo**
  **Portland, Oregon 97229 (US)**
• **GORDON, Joseph G. II**
  **San Jose, California 95120 (US)**

• **NALAMASU, Omkaram**
  **San Jose, California 95138 (US)**
• **SUN, Yangkook**
  **Seoul 135-280 (KR)**
• **KIM, Wongi**
  **Gimpo-si**
  **Gyeonggi-do 415-020 (KR)**
• **OH, Seungmin**
  **Gumi-si**
  **Gyeongsangbuk-do 730-140 (KR)**

(74) Representative: **Treeby, Philip David William et al**
**Maucher Jenkins
26 Caxton Street
London SW1H 0RJ (GB)**

(56) References cited:
**EP-A1- 2 360 119**    **WO-A1-2011/032264**
**JP-A- 2008 226 463**    **JP-A- 2011 181 375**
**US-A1- 2010 163 790**    **US-A1- 2010 279 172**
**US-A1- 2011 042 609**    **US-A1- 2011 269 023**

## Description

### Technical Field

The present invention relates to a cathode active material for a lithium secondary battery, a method for preparing the same, and a lithium secondary battery including the same.

### Background Art

A battery generates electric power by using electrochemically active materials for a cathode and an anode. In the present invention, the cathode means "a positive electrode" and the anode means "a negative electrode" unless defined otherwise. A representative example of such a battery is a lithium secondary battery which generates electric energy by a change of chemical potential during the intercalation/deintercalation of lithium ions in the cathode and the anode.

The lithium secondary battery employs materials capable of reversibly intercalating/deintercalating lithium ions as a cathode active material and an anode active material, and is fabricated by filling up an organic electrolyte or a polymer electrolyte between the cathode and the anode.

As the anode active material for the lithium secondary battery, various types of carbonaceous materials capable of intercalating/deintercalating lithium, such as artificial graphite, natural graphite, hard carbon, and the like, may be employed.

As the cathode active material for the lithium secondary battery, a lithium complex metal compound is used. For example, complex metal oxides, such as $LiCoO_2$, $LiMn_2O_4$, $LiNiO_2$, $LiNi_{1-x}Co_xO_2$ (0<x<1), $LiMnO_2$, $LiFePO_4$, are researched.

US2011/0269023 relates to a power storage device including a positive electrode having a positive electrode active material and a positive electrode current collector; and a negative electrode which faces the positive electrode with an electrolyte provided between the negative electrode and the positive electrode is provided. The positive electrode active material includes a first region which includes a phosphate compound containing lithium and nickel; and a second region which covers the first region and includes a compound containing lithium and one or more of iron, manganese, and cobalt, but not containing nickel.

WO2011/032264 relates to a positive electrode material, consisting of particles having a complex oxide OC1 core, an at least partial complex oxide OC2 coating, and an adhesive carbon surface deposit.

EP2360119 relates to a multi-component system lithium phosphate compound particles having an olivine structure and represented by a general formula of $Li_YM1_{1-Z}M2_ZPO_4$ in which M1 is one metal element selected from the group consisting of Fe, Mn and Co, Y is a number satisfying a formula of $0.9 \leq Y \leq 1.2$, M2 is at least one metal element selected from the group consisting of Mn, Co, Mg, Ti and Al, and Z is an number satisfying a formula of $0 < Z \leq 0.1$, wherein a concentration of the metal element M2 existing on a surface of the particle is higher than the concentration of that existing in core portion of the particle and that the concentration of the metal element M2 is continuously lowered from the surface of particle to a core portion of the particle.

### Disclosure of the Invention

#### Solution to Problem

An object of the present invention is to provide a cathode active material for a lithium secondary battery, which has a high output characteristic, a high capacity characteristic, a high thermal stability, and a high lifetime characteristic.

In accordance with the present invention, there is provided a cathode active material for a lithium secondary battery as set out in claim 1, a method for preparing a cathode active material for a lithium secondary battery as set out in claim 11 and claim 19, and a lithium secondary battery as set out in claim 21.

### Brief Description of Drawings

Fig. 1 schematically shows the structure of a lithium secondary battery according to one embodiment of the present invention.

Fig. 2 shows a cross section of a scanning electron microscope (SEM) of a core-shell precursor according to example 1 of the present invention.

Fig. 3a is energy dispersive X-ray (EDX) analysis data for point A of Fig. 2, and Fig. 3b is energy dispersive X-ray (EDX) analysis data for point B of Fig. 2.

Fig. 4 shows a cross section of a scanning electron microscope (SEM) of an active material precursor according to comparative example 1 of the present invention.

Fig. 5a is energy dispersive X-ray (EDX) analysis data for point C of Fig. 4, and Fig. 5b is energy dispersive X-ray (EDX) analysis data for point D of Fig. 4.

Fig. 6 shows one charge-discharge graph of a coin-shaped half cell according to example 2 of the present invention.

Fig. 7 shows one charge-discharge graph of a coin-shaped half cell according to comparative example 3 of the present invention.

## Mode for the Invention

Hereinafter, an embodiment of the present invention will be described with reference to the accompanying drawings in such a manner that a person skilled in the art of the invention can easily realize the invention. However, this is illustrative only, and does not limit the invention. The present invention is defined only by the appended claims.

In the drawings, the thicknesses of several layers and areas are enlarged for clear illustration. Through the entire specification, similar parts are designated with the same numerals.

When one part such as a layer, a film, an area, or a plate is "above" another part, one part may be "just above" another part or a further part may be intervened therebetween. In reverse, when one part is "just above" another part, there may be no part intervened therebetween.

According to one embodiment of the present invention, a cathode active material for a lithium secondary battery includes: a core including the compound represented by Formula 1; and a shell including the compound represented by Formula 2, in which the core and the shell have different material compositions. In other words, in Formulas 1 and 2, there is no case where $x1=x2$, $M1=M3$, $y1=y2$, $M2=M4$, $z1=z2$, and $w1=w2$, and also $x1=x2$, $M2=M3$, $z1=y2$, $M1=M4$, $y1=z2$, and $w1=w2$.

$$[\text{Formula 1}] \qquad Li_{x1}M1_{y1}M2_{z1}PO_{4-w1}E_{w1}$$

$$[\text{Formula 2}] \qquad Li_{x2}M3_{y2}M4_{z2}PO_{4-w2}E_{w2}$$

In the Formulas 1 and 2,

M1, M2, M3 and M4 are the same or different, and each is independently selected from the group consisting of Ni, Co, Mn, Fe, Na, Mg, Ca, Ti, V, Cr, Cu, Zn, Ge, Sr, Ag, Ba, Zr, Nb, Mo, Al, Ga, B, and a combination thereof, and particularly may be selected from the group consisting of Ni, Co, and a combination thereof,

E is selected from the group consisting of F, S, and a combination thereof, and particularly may be F,

It can be possible that $0<x1\leq1$, $0\leq y1\leq1$, $0\leq z1\leq1$, $0<x1+y1+z1\leq2$, and particularly $0.9<x1\leq1.1$, $0\leq y1\leq1$, $0\leq z1\leq1$, $0.9<x1+y1+z1\leq2$,

It can be possible that $0\leq w1\leq0.5$, and particularly $0\leq w1\leq0.3$,

It can be possible that $0<x2\leq1$, $0\leq y2\leq1$, $0\leq z2\leq1$, and $0<x2+y2+z2\leq2$, and particularly $0.9<x2\leq1.1$, $0\leq y2\leq1$, $0\leq z2\leq1$, and $0.9<x2+y2+z2\leq2$, and

It can be possible that $0\leq w2\leq0.5$ and particularly $0\leq w2\leq0.3$.

The cathode active material for the lithium secondary battery may include the core and the shell, thereby compositely and effectively improving various physical properties of the lithium secondary battery. For example, when a material having a high voltage characteristic and a high energy density is used as the core, and a material having a high thermal stability and a high lifetime characteristic is used as the shell, it is possible to improve not only an output characteristic and a capacity characteristic but also a thermal stability and a lifetime characteristic of the lithium secondary battery including the cathode active material for the lithium secondary battery. However, the present invention is not limited thereto. The material constituting the core and the material constituting the shell may be the same or different, and may selectively include materials having various electrochemical properties and physical properties, respectively. Thus, the cathode active material for the lithium secondary battery has an advantage in that various required properties can be effectively achieved.

The core and the cathode active material for the lithium secondary battery may be formed in a spherical shape, an oval shape, or a combination thereof, respectively, but the present invention is not limited thereto.

As one example, M1 and M3 may be the same materials, and M2 and M4 may be the same materials, in which $x1=x2$, $y1<y2$, and $z1>z2$. Herein, although the core and the shell include the same materials, materials included in the core and the shell, respectively, have different densities, that is, different material compositions. Thus, it is possible to overcome the disadvantages of one material composition (such as a low oxidation/reduction potential, a low discharge capacity, a low lifetime characteristic, a low thermal stability, and the like) by forming a core-shell structure with another material composition. In other words, it is possible to prepare a cathode active material for a lithium secondary battery, which can effectively show only advantages of respective material compositions.

Herein, M1 and M3 may be selected from the group consisting of Co, Ni, and a combination thereof, and M2 and M4 may be selected from the group consisting of Ni, Co, and a combination thereof, but the present invention is not limited thereto. The high voltage characteristic is more superior according to the order of Ni>Co, and the thermal stability and the lifetime characteristic are more superior according to the order of Co>Ni. Accordingly, in consideration of these characteristics, by appropriately selecting materials to be included in the core and the shell, it is possible to effectively improve the high voltage characteristic, the thermal stability, and the lifetime characteristic. For example, a combination of M1 and M2 may be (Co,Ni), (Ni,Co), or the like, also, a combination of M3 and M4 may be (Co,Ni), (Ni,Co), or the like, but the present invention is not limited thereto.

Specifically, M1 and M3 may be Co ($y1=0$), and M2 and M4 may be Ni ($z2=0$). In this case, the core may be a lithium-nickel-phosphoric acid composite, which can improve the high voltage characteristic and increase the energy density, and the shell may be a lithium-cobalt-phosphoric acid composite, which can show a high thermal stability and a high lifetime characteristic.

As a result, a cathode active material for the lithium secondary battery, which includes the core and the shell, may have not only a high output characteristic and a high capacity characteristic but also a high thermal stability and a high lifetime characteristic.

As another example, M1 and M3 may be different materials, and M2 and M4 may be different materials. Specifically, M1, M2, M3, and M4 may be different materials. Herein, each of M1 to M4 may be independently selected from the group consisting of Fe, Co, Ni, Mn, and a combination thereof, but the present invention is not limited thereto. Specifically, a combination of M1 and M2 to be included in the core may be (Ni,Co), (Co,Ni), or the like, also, a combination of M3 and M4 to be included in the shell may be (Co,Ni), (Ni,Co), or the like, but the present invention is not limited thereto. In this case, the core can improve the high voltage characteristic and increase the energy density, and the shell can improve the thermal stability and the lifetime characteristic. Thus, a cathode active material for the lithium secondary battery, which includes the core and the shell, may have a high output characteristic, a high capacity characteristic, a high thermal stability and a high lifetime characteristic.

Meanwhile, in the cathode active material for the lithium secondary battery, M1 is different from M2, and the core may have a structure in which in the direction away from the center of the core, the concentration of M1 increases, and the concentration of M2 decreases. The change of the concentration may be continuous, but the present invention is not limited thereto. The change of the concentration may be discontinuous, in which the core may be formed in a multi-layer structure. Of course, such a structure may be applied to not only the case where the materials constituting the core and the shell, respectively, are the same, but also the case where the materials constituting the core and the shell, respectively, are different. In the core, when the concentrations of M1 and M2 change as described above, a stable crystal structure can be formed by preventing a core material composition from being suddenly changed. Also, it is possible to complement disadvantages of respective electrochemical properties of different materials constituting the core, and to show composite advantages of respective electrochemical properties of different materials constituting the core. Also, in a portion adjacent to the shell, it is possible to prevent or lessen the generation of an impurity phase by preventing a sudden difference of material compositions between the core and the shell from occurring.

The core may have a diameter of about 5 $\mu$m to 20 $\mu$m. When the diameter of the core is within the above described range, it is possible to easily form a core-shell composite, and effectively improve an electrochemical property. Specifically, the core may have a diameter of about 7 $\mu$m to 15 $\mu$m.

In the cathode active material for the lithium secondary battery, M3 is different from M4, and the shell may have a structure in which in the direction away from the interface between the core and the shell, the concentration of M3 increases, and the concentration of M4 decreases. The change of the concentration may be continuous, but the present invention is not limited thereto. The change of the concentration may be discontinuous, in which the shell may be formed in a multi-layer structure. Of course, such a structure may be applied to not only the case where the materials constituting the core and the shell, respectively, are the same, but also the case where the materials constituting the core and the shell, respectively, are different. Herein, M3 may be selected from the group consisting of Co, Ni, and a combination thereof, and M4 may be selected from the group consisting of Ni, Co, and a combination thereof, but the present invention is not limited thereto. In the shell, when the concentrations of M3 and M4 change as described above, a stable crystal structure can be formed by preventing a shell material composition from being suddenly changed. Also, it is possible to complement disadvantages of respective electrochemical properties of different materials constituting the shell, and to show composite advantages of respective electrochemical properties of different materials constituting the shell. Also, in a portion adjacent to the core, it is possible to prevent or lessen the generation of an impurity phase by preventing a sudden difference of material compositions between the core and the shell from occurring.

The shell may have a thickness of about 100 nm to 5 $\mu$m. When the thickness of the shell is within the above described range, it is possible to form a core-shell composite while maintaining the morphology of the core-shell composite.

Also, it is possible to effectively complement the electrochemical property of the core, and thus to effectively improve the electrochemical property of the lithium secondary battery cathode active material including the core. Specifically, the shell may have a thickness of about 200 nm to 3 μm.

The cathode active material for the lithium secondary battery may further include a carbon coating layer on the surface of the shell. Since the further inclusion of the carbon coating layer improves the electric conductivity, the cathode active material for the lithium secondary battery may have a high electrochemical property.

The carbon coating layer may have a thickness of about 10 nm to 200 nm. When the thickness of the carbon coating layer is within the above described range, it is possible to effectively improve the electric conductivity. Thus, the lithium secondary battery cathode active material including the coating layer may have a high electrochemical property. Specifically, the carbon coating layer may have a thickness of about 15 nm to 100 nm.

In the cathode active material for the lithium secondary battery, the core and the shell are separately described, but the present invention is not limited thereto. When materials included in the core and the shell are the same, and are distributed with a continuous concentration gradient, the cathode active material for the lithium secondary battery may be formed in one particle shape without a boundary between the core and the shell.

The cathode active material for the lithium secondary battery may further include an interlayer between the core and the shell, and the material composition of the interlayer may be different from those of the core and the shell. Herein, the interlayer may include the compound represented by Formula 3.

$$\text{[Formula 3]} \qquad Li_{x3}M5_{y3}M6_{z3}PO_{4-w3}E_{w3}$$

In Formula 3,

M5 and M6 are the same or different, and each is independently selected from the group consisting of Ni, Co, Mn, Fe, Na, Mg, Ca, Ti, V, Cr, Cu, Zn, Ge, Sr, Ag, Ba, Zr, Nb, Mo, Al, Ga, B, and a combination thereof, and particularly may be selected from the group consisting of Ni, Co, and a combination thereof,

E is selected from the group consisting of F, S, and a combination thereof, and particularly may be F,

It can be possible that $0<x3\leq1$, $0\leq y3\leq1$, $0\leq z3\leq1$, and $0<x3+y3+z3\leq2$, and particularly $0.9<x3\leq1.1$, $0.1\leq y3\leq0.9$, $0.1\leq z3\leq0.9$, and $1.1<x3+y3+z3\leq2.9$.

It can be possible that $0\leq w3\leq0.5$, and particularly $0\leq w3\leq0.3$.

As one example, M1, M3, and M5 may be the same materials, and M2, M4, and M6 may be the same materials, in which $x1=x2=x3$, $y1<y3<y2$, and $z1>z3>z2$. Herein, although the core, the interlayer, and the shell include the same materials, materials included in the core, the interlayer and the shell, respectively, have different densities, that is, different material compositions. Thus, when the interlayer exists, and has the composition as described above, it is possible to prevent or lessen the generation of an impurity phase by preventing a sudden difference of compositions between the core and the shell from occurring. Also, sincea sudden phase boundary does not occur, it is possible to stabilize a crystal structure.

Herein, M1, M3, and M5 may be selected from the group consisting of Co, Ni, and a combination thereof, and M2, M4, and M6 may be selected from the group consisting of Ni, Co, and a combination thereof, but the present invention is not limited thereto. For example, a combination of M1 and M2 may be (Ni,Co) (Co,Ni) or the like, a combination of M3 and M4 may be (Ni,Co) (Co,Ni) or the like, and a combination of M5 and M6 may be (Ni,Co) (Co,Ni) or the like.

Specifically, M1, M3, and M5 may be Fe (y1=0), and M2, M4, and M6 may be Mn (z2=0). In this case, the core may be a lithium-manganese-phosphoric acid composite, which can improve the high voltage characteristic and increase the energy density, the interlayer may be a lithium-iron-manganese-phosphoric acid composite, which can lessen a sudden difference of compositions between the core and the shell, and the shell may be a lithium-iron-phosphoric acid composite, which can show a high thermal stability and a high lifetime characteristic.

Specifically, M1, M3, and M5 may be Co (y1=0), and M2, M4, and M6 may be Ni (z2=0). In this case, the core may be a lithium-nickel-phosphoric acid composite, which can improve the high voltage characteristic and increase the energy density, the interlayer may be a lithium-cobalt-nickel-phosphoric acid composite, which can lessen a sudden difference of compositions between the core and the shell, and the shell may be a lithium-cobalt-phosphoric acid composite, which can show a high thermal stability and a high lifetime characteristic.

As a result, a cathode active material for the lithium secondary battery, which includes the core, the interlayer, and the shell, may have a stable crystal structure, and also a high output characteristic, a high capacity characteristic, a high thermal stability and a high lifetime characteristic.

As another example, M1, M3, and M5 may be different materials, and M2, M4, and M6 may be different materials. Herein, each of M1 to M6 may be independently selected from the group consisting of Co, Ni, and a combination thereof, but the present invention is not limited thereto. Specifically, a combination of M1 and M2 to be included in the core may be (Ni,Co), (Co,Ni), or the like, a combination of M5 and M6 to be included in the interlayer may be (Co,Ni), (Ni,Co) or the like, and a combination of M3 and M4 to be included in the shell may be (Ni,Co), (Co,Ni), or the like, but the present invention is not limited thereto. In this case, the core can improve the high voltage characteristic and increase the energy density, and the shell can improve the thermal stability and the lifetime characteristic. Also, the interlayer can complement the electrochemical properties of the core and the shell. Thus, a cathode active material for the lithium secondary battery, which includes the core, the interlayer, and the shell, may have a high output characteristic, a high capacity characteristic, a high thermal stability and a high lifetime characteristic.

Meanwhile, in the cathode active material for the lithium secondary battery, M5 is different from M6, and the interlayer may have a structure in which in the direction away from the core, the concentration of M5 increases, and the concentration of M6 decreases. The change of the concentration may be continuous, but the present invention is not limited thereto. The change of the concentration may be discontinuous, in which the interlayer may be formed in a multi-layer structure. Of course, such a structure may be applied to not only the case where the materials constituting the core, the shell, and the interlayer, respectively, are the same, but also the case where the materials constituting the core, the shell and the interlayer, respectively, are different. Herein, M5 may be selected from the group consisting of Co, Ni, and a combination thereof, and M6 may be selected from the group consisting of Ni, Co, and a combination thereof, but the present invention is not limited thereto. In the interlayer, when the concentrations of M5 and M6 change as described above, a stable crystal structure can be formed by preventing an interlayer's material composition from being suddenly changed. Also, it is possible to complement disadvantages of respective electrochemical properties of different materials constituting the interlayer, and to show composite advantages of respective electrochemical properties of different materials constituting the interlayer. Also, it is possible to prevent or lessen the generation of an impurity phase by preventing a sudden difference of material compositions between the core and the interlayer from occurring in a portion adjacent to the core, and by preventing a sudden difference of material compositions between the shell and the interlayer from occurring in a portion adjacent to the shell.

The interlayer may have a thickness of about 100 nm to 24 $\mu$m. When the thickness of the interlayer is within the above described range, it is possible to effectively prevent or lessen the generation of an impurity phase by preventing a sudden difference of compositions between the core and the shell from occurring. Also, since a sudden phase boundary does not occur, it is possible to effectively stabilize a crystal structure. Specifically, the interlayer may have a thickness of about 1 $\mu$m to 20 $\mu$m.

In the cathode active material for the lithium secondary battery, the core, the interlayer, and the shell are separately described, but the present invention is not limited thereto. When materials included in the core, the interlayer, and the shell are the same, and are distributed with a continuous concentration gradient, the cathode active material for the lithium secondary battery may be formed in one particle shape without a boundary between the core, the interlayer, and the shell.

Although various examples of a cathode active material for a lithium secondary battery, according to an embodiment of the present invention, have been described, the present invention is not limited thereto.

The cathode active material for the lithium secondary battery may have a diameter of about 5 $\mu$m to 25 $\mu$m. When the diameter of the cathode active material for the lithium secondary battery is within the above described range, it is possible to effectively improve an energy density due to a high tap density. Specifically, the cathode active material for the lithium secondary battery may have a diameter of about 5 $\mu$m to 15 $\mu$m.

The cathode active material for the lithium secondary battery may have a tap density of about 1g/cm$^3$ to 2g/cm$^3$. When the tap density of the cathode active material for the lithium secondary battery is within the above described range, it is possible to effectively improve an energy density. Specifically, the cathode active material for the lithium secondary battery may have a tap density of about 1.2g/cm$^3$ to 1.7g/cm$^3$, and more specifically, of about 1.5g/cm$^3$ to 1.7g/cm$^3$.

According to another embodiment of the present invention, a method for preparing the cathode active material for the lithium secondary battery includes the steps of:
forming a core precursor by mixing an M1 source, an M2 source, and a phosphoric acid source; forming a core-shell precursor by mixing the core precursor with an M3 source, an M4 source, and a phosphoric acid source, the core-shell precursor including a shell precursor formed on the surface of the core precursor; forming acore-shell composite by performing a heat treatment on the core-shell precursor; and mixing the core-shell composite with a lithium source, followed by calcination. As long as there is no further description below, M1, M2, M3, and M4 are as described above.

According to a further embodiment of the present invention, a method for preparing the cathode active material for the lithium secondary battery includes the steps of:
forming a core precursor by mixing an M1 source and an M2 source; forming a core-shell precursor by mixing the core precursor with an M3 source, and an M4 source, the core-shell precursor including a shell precursor formed on the surface of the core precursor; and mixing the core-shell precursor with a lithium source and a phosphoric acid source, followed by calcination. As long as there is no further description below, M1, M2, M3, and M4 are as described above.

The M1 source, the M2 source, the M3 source, and the M4 source may include sulfur oxide, nitrogen oxide, acetic oxide, hydroxide, chloride, oxalate, fluoride, carbonate, or a combination thereof of M1, M2, M3 and M4, respectively.

The phosphoric acid source may include phosphoric acid ($H_3PO_4$), ammonium phosphate dibasic (($NH_4$)$_2HPO_4$), ammonium phosphate trihydrate (($NH_4$)$_3PO_4.3H_2O$), metaphosphoric acid, orthophosphoric acid, monoammonium phosphate ($NH_4H_2PO_4$), or a combination thereof.

In the method for preparing the cathode active material for the lithium secondary battery, each of the core precursor, and the shell precursor may include phosphorus oxide, oxalate, carbonate, hydroxide, or a combination thereof.

In the step of forming a core-shell composite by performing a heat treatment on the core-shell precursor, the heat treatment may be performed at a temperature ranging from about 300°C to 700°C for about 1 to 20 hours. When the heat treatment is performed under the above described condition, it is possible to improve the crystallinity of the formed core-shell composite, and thus to effectively improve the electrochemical property of the cathode active material for the lithium secondary battery, formed from the core-shell composite. Specifically, the heat treatment may be performed at a temperature ranging from about 400°C to 700°C for about 5 to 15 hours.

During the heat treatment, the temperature rising speed may be from about 1°C/min to 10°C/min. When the temperature rising speed is within the above described range, the formed core-shell composite may have a uniform crystallinity. Thus, it is possible to effectively form an olivine type cathode active material for the lithium secondary battery without generation of impurity phase. Specifically, during the heat treatment, the temperature rising speed may be from about 2°C/min to 5°C/min.

In the step of mixing the lithium source, or the lithium source and the phosphoric acid source, with the core-shell composite, followed by calcination, the lithium source may include lithium phosphate ($Li_3PO_4$), lithium nitrate($LiNO_3$), lithium acetate ($LiCH_3COOH$), lithium carbonate ($Li_2CO_3$), lithium hydroxide ($LiOH$), lithium dihydrogen phosphate ($LiH_2PO_4$), or a combination thereof, but the present invention is not limited thereto. The phosphoric acid source is as described above.

The core-shell composite and the lithium source may be mixed in a molar ratio of about 1:0.8 to 1:1.2. When the molar ratio of the core-shell composite and the lithium source is within the above described range, it is possible to effectively form an olivine-based cathode active material for the lithium secondary battery in a stable structure. Also, since an impurity phase is not generated, the cathode active material for the lithium secondary battery may have a high electrochemical property. Specifically, the core-shell composite and the lithium source may be mixed in a molar ratio of about 1:0.9 to 1:1.1.

In the step of mixing the lithium source, or the lithium source and the phosphoric acid source, with the core-shell composite, followed by calcination, the calcination may be carried out at a temperature ranging from about 600 °C to 900 °C for about 5 to 20 hours. When the calcination is performed under the above described condition, it is possible to improve the crystallinity of the formed cathode active material for the lithium secondary battery. Also, since an impurity phase is not generated, it is possible to achieve a high electrochemical property of the cathode active material for the lithium secondary battery. Specifically, the calcination may be carried out at a temperature ranging from about 650 °C to 800 °C for about 10 to 15 hours.

During the calcination, the temperature rising speed may be from about 1°C/min to 10°C/min. When the temperature rising speed is within the above described range, it is possible to improve the crystallinity of the formed cathode active material for the lithium secondary battery. Furthermore, since an impurity phase is not generated, it is possible to achieve a high electrochemical property of the cathode active material for the lithium secondary battery. Specifically, during the calcination, the temperature rising speed may be from about 2°C/min to 5°C/min.

The method for preparing the cathode active material for the lithium secondary battery may further include the step of forming a carbon coating layer on the surface of the core-shell composite or the core-shell precursor, after the step of forming the core-shell composite or the step of forming the core-shell precursor. The carbon coating layer may be formed by mixing the core-shell composite with a carbon source such as pitch, sucrose, glucose, polyvinyl alcohol, polypyrrole, cellulose, acetylene black, and super-p.

Also, in the steps of forming the core precursor, and forming the core-shell precursor, or in a combination thereof, the above described carbon source may be further mixed, so that carbon can be introduced into the core precursor, the core-shell precursor, or the combination thereof. In this case, it is possible to improve the electric conductivity of the formed cathode active material for the lithium secondary battery.

The method for preparing the cathode active material for the lithium secondary battery may further include the step of forming an interlayer precursor on the surface of the core precursor by mixing the core precursor with the M5 source, the M6 source, and the phosphoric acid source, or with the M5 source and the M6 source, after the step of forming the core precursor. Then, through heat treatment and calcination, the interlayer precursor is formed into an interlayer. As long as there is no further description below, M5 and M6 are as described above.

The interlayer precursor may be formed by mixing and reacting the M5 source and the M6 source with the core precursor, the M5 source and the M6 source including sulfur oxide, nitrogen oxide, acetic oxide, phosphorus oxide, chloride, oxalate, fluoride, carbonate, or a combination thereof of M5 and M6, respectively, but the present invention is not limited thereto. Meanwhile, in the step of forming the interlayer precursor, a phosphoric acid source may be further mixed. The phosphoric acid source is as described above.

In the method for preparing the cathode active material for the lithium secondary battery, the description on a complexing agent (such as aqueous ammonia), a pH adjuster (such as an alkaline solution providing a hydroxyl group), a heat treatment atmosphere, generally known in the art, is omitted.

Through the method, the cathode active material for the lithium secondary battery, according to one embodiment of the present invention, can be prepared.

The cathode active material for the lithium secondary battery may be usefully used for a cathode of an electrochemical cell such as a lithium secondary battery. The lithium secondary battery includes an anode (including an anode active material), and an electrolyte as well as the cathode.

The cathode includes a current collector, and a cathode active material layer formed on the current collector.

Also, the cathode active material layer includes a binder and a conductive material.

The binder performs a role of sufficiently binding cathode active material particles to each other, and also sufficiently binding the cathode active material to the current collector. Representative examples of the binder may include polyvinyl alcohol, carboxymethylcellulose, hydroxypropylcellulose, diacetyl cellulose, polyvinylchloride, carboxylated polyvinylchloride, polyvinyl fluoride, polymer including ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, etc., but the present invention is not limited thereto.

The conductive material is used to provide conductivity to an electrode. There is no limitation in the conductive material as long as it is an electronic conductive material and does not cause a chemical change in a configured cell. Examples of the conductive material may include natural graphite, artificial graphite, carbon black, acetylene black, ketjen black, carbon fiber, metallic powder and metallic fiber (such as copper, nickel, aluminum, and silver), a polyphenylene derivative, or a mixture of one kind or more of those.

As the current collector, Al may be used, but the present invention is not limited thereto.

The anode includes a current collector, and an anode active material layer formed on the current collector, and the anode active material layer includes an anode active material.

The anode active material includes a material capable of reversibly intercalating/ deintercalating lithium ions, lithium metal, alloy of lithium metal, a material capable of doping or dedoping lithium, or transition metal oxide.

The material capable of reversibly intercalating/deintercalating lithium ions may include a carbon material. There is no limitation in the carbon-based anode active material as long as it is generally used in a lithium ion secondary battery. Representative examples of the carbon material may include crystalline carbon, amorphous carbon, or a combination thereof. Examples of the crystalline carbon may include amorphous, plate-like, flake, spherical, or fiber-like natural/artificial graphite, and examples of the amorphous carbon may include soft carbon (low temperature-fired carbon) or hard carbon, mesophase pitch carbide, fired coke, etc.

The alloy of the lithium metal includes an alloy of lithium with a metal selected from the group consisting of Na, K, Rb, Cs, Fr, Be, Mg, Ca, Sr, Si, Sb, Pb, In, Zn, Ba, Ra, Ge, Al and Sn.

The material capable of doping or dedoping lithium may include Si, $SiO_x(0 < x < 2)$, Si-M alloy (M (not Si) is selected from the group consisting of alkaline metal, alkaline earth metal, elements of groups 13 to 16, transition metal, rare earth elements, and a combination thereof), Sn, $SnO_2$, Sn-M (M (not Sn) is selected from the group consisting of alkaline metal, alkaline earth metal, elements of groups 13 to 16, transition metal, rare earth elements, and a combination thereof), or the like. Also, at least one of the above enumerated materials may be mixed with $SiO_2$. The element M may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include vanadium oxide, lithium vanadium oxide, or the like.

Also, the anode active material layer may include a binder, and may further optionally include a conductive material.

The binder performs a role of sufficiently binding anode active material particles to each other, and also sufficiently binding the anode active material to the current collector. Representative examples of the binder may include polyvinyl alcohol, carboxymethylcellulose, hydroxypropylcellulose, polyvinylchloride, carboxylated polyvinylchloride, polyvinyl fluoride, polymer including ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, etc., but the present invention is not limited thereto.

The conductive material is used to provide conductivity to an electrode. There is no limitation in the conductive material as long as it is an electronic conductive material and does not cause a chemical change in a configured cell. Examples of the conductive material may include: a carbon-based material such as natural graphite, artificial graphite, carbon black, acetylene black, ketjen black, and carbon fiber; a metal-based material including metallic powder and metallic fiber, such as copper, nickel, aluminum, and silver; a conductive polymer such as a polyphenylene derivative or a mixture thereof.

The current collector may include copper foil, nickel foil, stainless steel foil, titanium foil, nickel foam, copper foam, polymer substrate coated with conductive metal, or a combination thereof.

Each of the cathode and the anode is fabricated by the steps of: preparing an active material composition by mixing an active material, a conductive material, a binder in a solvent; and applying the composition to a current collector. Such an electrode fabrication method is widely known in the art, and thus its detailed description is omitted in the present specification. As the solvent, N-methyl pyrrolidone or the like may be used, but the present invention is not limited thereto.

As an electrolyte filled up in the lithium secondary battery, a non-aqueous electrolyte or a generally known solid electrolyte may be used, and also an electrolyte including lithium salt dissolved therein may be used.

A solvent for the non-aqueous electrolyte may include: cyclic carbonates such as ethylene carbonate, diethylene carbonate, propylene carbonate, butylenes carbonate, vinylene carbonate chain carbonates such as dimethyl carbonate, ethyl methyl carbonate, diethyl carbonate esters such as methyl acetate, ethyl acetate, propyl acetate, methyl propionate, ethyl propionate, γ-butyrolactone; ethers such as 1,2-dimethoxyethane, 1,2-diethoxyethane, tetrahydrofuran, 1,2-dioxane, 2-methyl tetrahydrofuran nitriles such as acetonitrile amides such as dimethyl formamide, or the like, but the present invention is not limited thereto. These may be used alone or in combinations of two or more. Especially, a mixed solvent of the cyclic carbonate and the chain carbonate may be used.

Also, as the electrolyte, a gel polymer electrolyte obtained by impregnating an electrolyte solution in a polymer electrolyte such as polyethylene oxide, polyacrylonitrile, or an inorganic solid electrolyte such as LiI, $Li_3N$, etc. may be used, but the present invention is not limited thereto.

Herein, the lithium salt may be selected from the group consisting of $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiSbF_6$, $LiAlO_4$, $LiAlO_2$ , $LiAlCl_4$, LiCl, and LiI, but the present invention is not limited thereto.

According to the kind of the lithium secondary battery, a separator may exist between a cathode and an anode. As the separator, polyethylene,polypropylene, polyvinylidene fluoride, or a multi-layer thereof (two or more layers) may be used. Of course, a mixed multi-layer, such as a two-layer separator of polyethylene/ polypropylene, a three-layer separator of polyethylene/polypropylene/polyethylene, or a three-layer separator of polypropylene/polyethylene/polypropylene, may be used.

The lithium secondary battery may be divided into a lithium ion battery, a lithium ion polymer battery, and a lithium polymer battery, according to the kinds of separator and electrolyte used therein. Also, the lithium secondary battery may be divided into a cylindrical battery, a square battery, a coin-type battery, and a pouch-type battery-according to its shape, and may be divided into a bulk-type battery and a thin-film-type battery according to its size. The configuration and the fabrication method of these batteries are widely known in the art, and thus their detailed description is omitted.

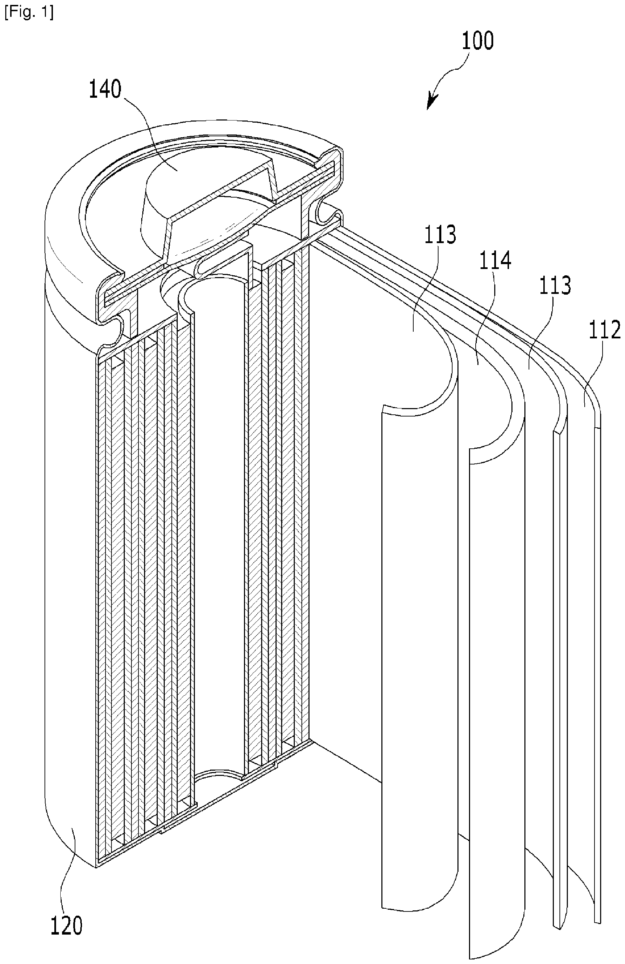

FIG. 1 schematically shows the structure of a lithium secondary battery according to one embodiment of the present invention. As shown in FIG. 1, the lithium secondary battery 100 mainly includes an anode 112, a cathode 114, a separator 113 positioned between the anode 112 and the cathode 114, an electrolyte (not shown) impregnated in the anode 112, the cathode 114, and the separator 113, a cell vessel 120, and a sealing member 140 for sealing the cell vessel 120. There is no particular limitation in the shape of the lithium secondary battery according to the present invention. It is natural that the lithium secondary battery may have any shape such as a cylindrical shape, a coin shape, and a pouch shape as long as it includes the electrolyte for the lithium secondary battery according to one embodiment of the present invention, and can be operated as a battery.

## Example

Hereinafter, the present invention will be described in more detail with reference to Examples and Comparative Examples. However, Examples and Comparative Examples, as described below, are illustrative only, and do not limit the present invention.

### Example 1: Preparation of a cathode active material for a lithium secondary battery

In a 4L continuous stirred tank reactor (CSTR) (capacity: 4L, a rotary motor output: 90W or more), $NiSO_4\cdot 6H_2O$, $H_3PO_4$, and $NH_4OH$ were introduced in a molar ratio of 3:2:6, and were reacted at pH 7. Herein, $NiSO_4\cdot 6H_2O$ was used with a molarity of 2.2M. The internal temperature of the reactor was maintained at 55°C while stirring was carried out at 1000rpm. Through stirring for 12 hours, a micro-size spherical active material precursor, that is, $Ni_3(PO_4)_2\cdot xH_2O$, was synthesized.

Then, after the introduction of $NiSO_4\cdot 6H_2O$ was stopped, $CoSO_4\cdot 7H_2O$ was introduced with a molarity of 2.2 M, followed by stirring. Thus, on the surface of the core precursor, a shell precursor of $Co_3(PO_4)_2\cdot xH_2O$ was formed, thereby synthesizing a core-shell precursor.

Then, the active material precursor was subjected to filtering through a vacuum pump, and then dried at 70°C for 24 hours under a vacuum atmosphere.

Then, the dried precursor was subjected to heat treatment at 550°C for 10 hours under a reduction atmosphere so as to provide nickel phosphate-cobalt phosphate.

Then, nickel phosphate-cobalt phosphate was mixed with 5 parts by weight of pitch carbon with respect to 100 parts by weight of nickel phosphate-cobalt phosphate, followed by stirring, so as to form a carbon coating layer on the surface of nickel phosphate-cobalt phosphate.

Then, the nickel phosphate-cobalt phosphate formed with the carbon coating layer was mixed with lithium phosphate ($Li_3PO_4$) in a molar ratio of 1:1, and heated up to 750°C at a temperature rising speed of 5°C/min, followed by calcination for 10 hours. As a result, an olivine type cathode active material for a lithium secondary battery, with a structure of $LiNiPO_4$(core)-$LiCoPO_4$(shell), was obtained.

**Example 2: Fabrication of a lithium secondary battery**

The cathode active material for the lithium secondary battery, prepared from Example 1, super-P as a conductive material, and polyvinylidene fluoride (PVdF) as a binder were mixed in a weight ratio of 85:7.5:7.5 so as to provide a slurry. The slurry was uniformly applied on an aluminum foil with a thickness of $20\mu m$, and was vacuum-dried at 120°C so as to provide a cathode.

Then, a coin-shaped half cell was fabricated according to a conventionally known fabrication method by using the obtained cathode and a lithium foil as a counter electrode, a porous polyethylene film (Celgard 2300, thickness: $25\mu m$, Celgard LLC) as a separator, and an electrolyte solution including 1.2M $LiPF_6$ dissolved in a solvent including ethylene carbonate and ethyl methyl carbonate in a 3:7 volume ratio.

**Comparative Example 1: Preparation of a cathode active material precursor for a lithium secondary battery**

In a 4L continuous stirred tank reactor (CSTR) (capacity: 4L, a rotary motor output: 90W or more), $NiSO_4 \cdot 6H_2O$, $H_3PO_4$, and $NH_4OH$ were introduced in a molar ratio of 3:2:6, and were reacted at pH 7. Herein, $NiSO_4 \cdot 6H_2O$ was used with a molarity of 2.2M. The internal temperature of the reactor was maintained at 55°C while stirring was carried out at 1000rpm. Through stirring for 12 hours, a micro-size spherical active material precursor, that is, $Ni_3(PO_4)_2 \cdot xH_2O$, was synthesized.

Then, the active material precursor was subjected to filtering through a vacuum pump, and then dried at 70°C for 24 hours under a vacuum atmosphere.

Then, the dried precursor was subjected to heat treatment at 550°C for 15 hours under a reduction atmosphere so as to provide nickel phosphate.

Then, the nickel phosphate was mixed with 2 parts by weight of pitch carbon with respect to 100 parts by weight of nickel phosphate, followed by stirring, so as to form a carbon coating layer on the surface of nickel phosphate.

Then, the nickel phosphate formed with the carbon coating layer was mixed with lithium phosphate ($Li_3PO_4$) in a molar ratio of 1:1, and heated up to 750°C at a temperature rising speed of 5°C/min, followed by calcination for 10 hours. As a result, an olivine type $LiNiPO_4$ cathode active material for a lithium secondary battery was obtained.

**Comparative Example 2: Preparation of a cathode active material precursor for a lithium secondary battery**

In a 4L continuous stirred tank reactor (CSTR) (capacity: 4L, a rotary motor output: 90W or more), $CoSO_4 \cdot 7H_2O$, $H_3PO_4$ and $NH_4OH$ were introduced in a molar ratio of 3:2:6, and were reacted at pH 7. Herein, $CoSO_4 \cdot 7H_2O$ was used with a molarity of 2.2M. The internal temperature of the reactor was maintained at 55°C while stirring was carried out at 1000rpm. Through stirring for 12 hours, a micro-size spherical active material precursor, that is, $Co_3(PO_4)_2 \cdot xH_2O$, was synthesized.

Then, the active material precursor was subjected to filtering through a vacuum pump, and then dried at 70°C for 24 hours under a vacuum atmosphere.

Then, the dried precursor was subjected to heat treatment at 550°C for 15 hours under a reduction atmosphere so as to provide cobalt phosphate.

Then, the cobalt phosphate was mixed with 2 parts by weight of pitch carbon with respect to 100 parts by weight of manganese phosphate, followed by stirring, so as to form a carbon coating layer on the surface of cobalt phosphate.

Then, the cobalt phosphate formed with the carbon coating layer was mixed with lithium phosphate ($Li_3PO_4$) in a molar ratio of 1:1, and heated up to 750°C at a temperature rising speed of 5°C/min, followed by calcination for 15 hours. As a result, an olivine type $LiCoPO_4$ cathode active material for a lithium secondary battery was obtained.

**Comparative Example 3: Fabrication of a lithium secondary battery**

The cathode active material for the lithium secondary battery, prepared from Comparative Example 1, super-P as a conductive material, and polyvinylidene fluoride (PVdF) as a binder were mixed in a weight ratio of 85:7.5:7.5 so as to provide a slurry. The slurry was uniformly applied on an aluminum foil with a thickness of $20\mu m$, and was vacuum-dried at 120°C so as to provide a cathode.

Then, a coin-shaped half cell was fabricated according to a conventionally known fabrication method by using the obtained cathode and a lithium foil as a counter electrode, a porous polyethylene film (Celgard 2300, thickness: $25\mu m$, Celgard LLC) as a separator, and an electrolyte solution including 1.2M $LiPF_6$ dissolved in a solvent including ethylene carbonate and ethyl methyl carbonate in a 3:7 volume ratio.

**Comparative Example 4: Fabrication of a lithium secondary battery**

The cathode active material for the lithium secondary battery, prepared from Comparative Example 2, super-P as a conductive material, and polyvinylidene fluoride (PVdF) as a binder were mixed in a weight ratio of 85:7.5:7.5 so as to provide a slurry. The slurry was uniformly applied on an aluminum foil with a thickness of $20\mu m$, and was vacuum-dried at 120°C so as to provide a cathode.

Then, a coin-shaped half cell was fabricated according to a conventionally known fabrication method by using the obtained cathode and a lithium foil as a counter electrode, a porous polyethylene film (Celgard 2300, thickness: $25\mu m$, Celgard LLC) as a separator, and an electrolyte solution including 1.2M $LiPF_6$ dissolved in a solvent including ethylene carbonate and ethyl methyl carbonate in a 3:7 volume ratio.

**Experimental Example 1: Measurement of a tap density**

10ml of each of the cathode active materials for a lithium secondary battery, prepared from Example 1, and Comparative Examples 1 and 2 was subjected to 500 strokes by using a measuring cylinder so as to measure a tap density.

The cathode active material for the lithium secondary battery, prepared from Example 1, has a tap density of 1.5 $g/cm^3$, the cathode active material for the lithium secondary battery, prepared from Comparative Example 1, has a tap density of 1.4 $g/cm^3$, and the cathode active material for the lithium secondary battery, prepared from Comparative Example 2, has a tap density of 1.2 $g/cm^3$.

From these results, it can be determined that the cathode active material for the lithium secondary battery, prepared from Example 1, has a higher tap density than the cathode active materials for the lithium secondary battery, prepared from Comparative Examples 1 and 2.

**Experimental Example 2: Scanning electron microscope (SEM) and energy dispersive X-ray (EDX) analysis**

The core-shell precursor according to example 1 and the active material precursor according to comparative examples 1 and 2 are sampled on each carbon tape, the SEM picture is taken by a platinum (Pt) plasma coating, and the energy dispersive X-ray analysis is performed.

At this time, the scanning electron microscope (SEM) JSM 6400 was used.

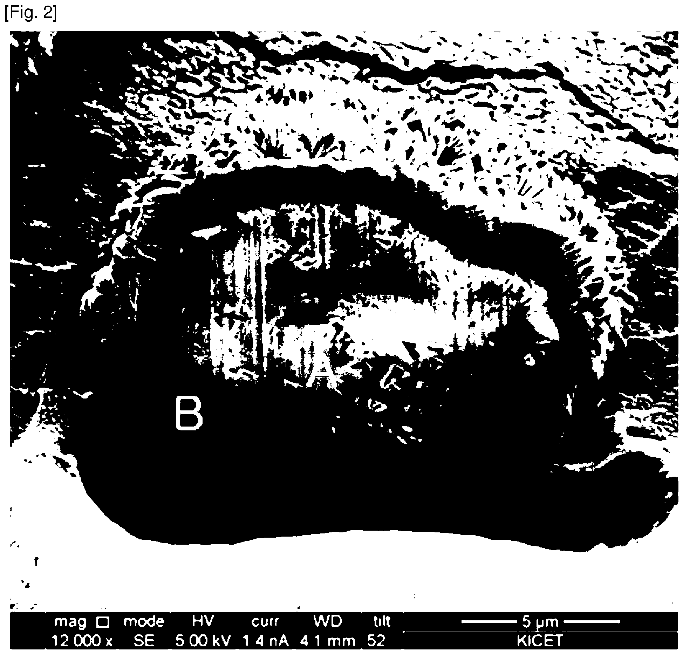

Fig. 2 shows a cross section of a scanning electron microscope (SEM) of a core-shell precursor according to example 1 of the present invention.

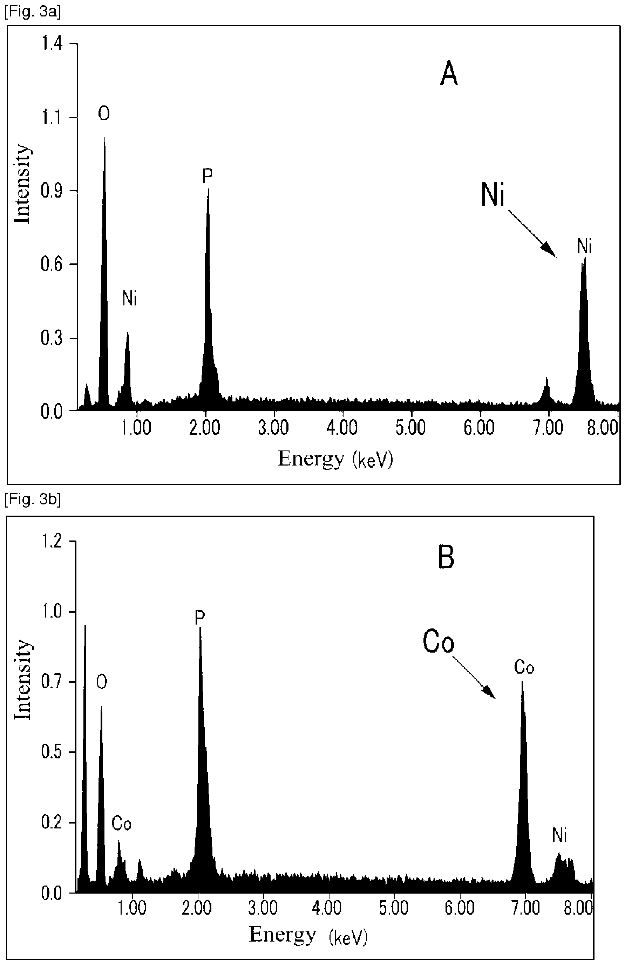

Additionally, Figs. 3a and 3b show energy dispersive X-ray (EDX) analysis data for point A and point B of Fig. 2, respectively.

As illustrated in Figs. 2, 3a and 3b, it is confirmed that the core-shell precursor according to example 1 is formed by a core-shell structure comprising the core including Ni and the shell including Co.

Accordingly, referring to Figs. 2, 3a and 3b, it can be predicted that cathode active material for lithium secondary battery formed by heating and firing the core-shell precursor according to example 1 has a $LiNiPO_4$(core)-$LiCoPO_4$(shell) structure.

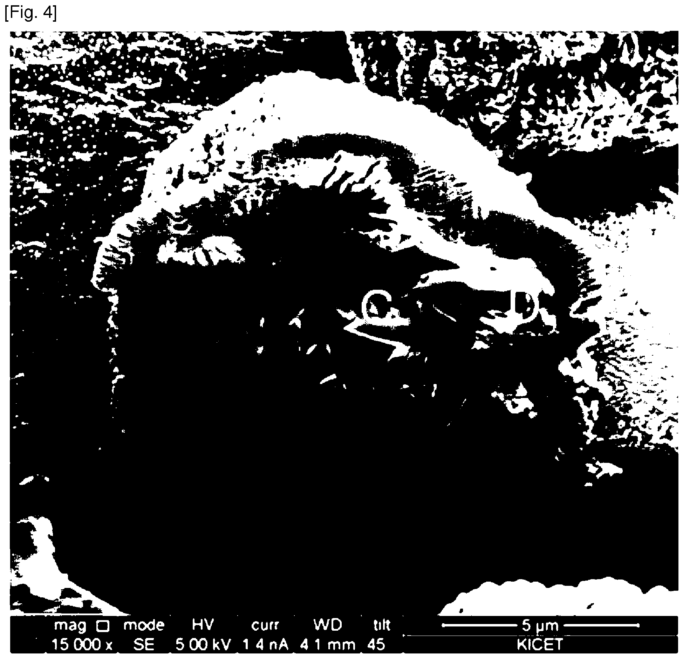

Meanwhile, Fig. 4 shows a cross section of a scanning electron microscope (SEM) of an active material precursor according to comparative example 1 of the present invention.

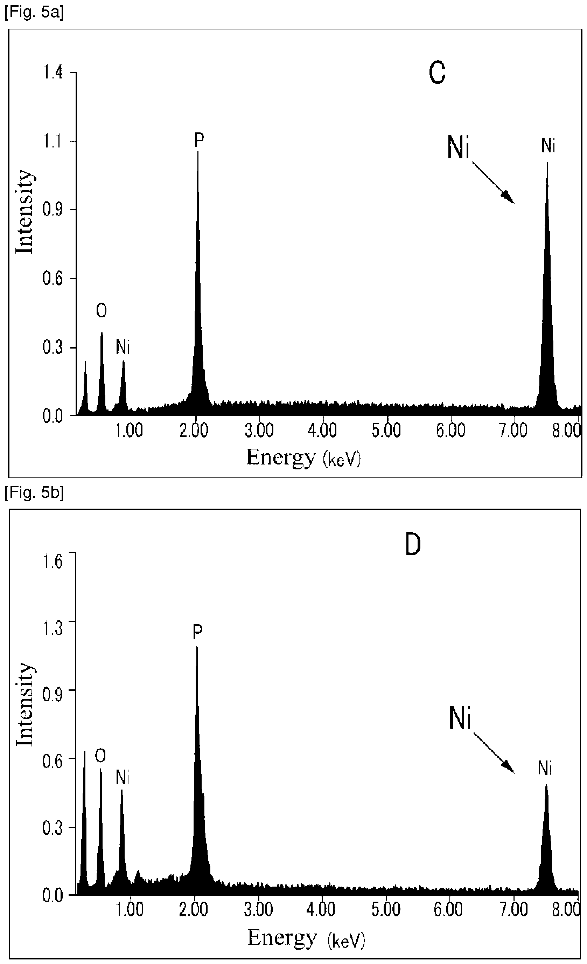

Additionally, Figs. 5a and 5b show energy dispersive X-ray (EDX) analysis data for point C and point D of Fig. 4, respectively.

As illustrated in Figs. 4, 5a and 5b, it is confirmed that the active material precursor according to comparative example 1 is formed by a single particle structure comprising Ni.

Accordingly, referring to Figs. 4, 5a and 5b, it can be predicted that the active material according to comparative example 1 has a $LiNiPO_4$ particle structure.

**Experimental Example 3: Initial charge capacity, initial discharge capacity and coulomb efficiency measurement**

One charge-discharge is performed for the coin-shaped half cells according to example 2, and comparative examples 3 and 4 at 30°C, 3.0V to 5.3V, and 0.05 C-rate (7.5 mA/g), respectively, and initial charge capacity and initial discharge capacity and coulomb efficiency are measured.

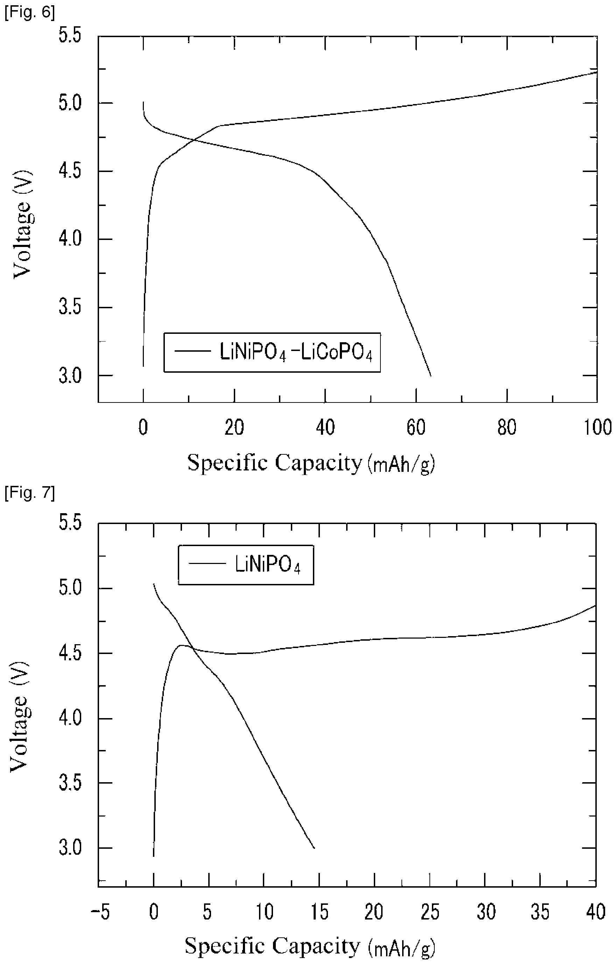

Fig. 6 shows one charge-discharge graph of the coin-shaped half cell according to example 2. The coin-shaped half cell according to example 2 shows 109.6 mAh/g of the initial charge capacity, 63.2 mAh/g of the initial discharge capacity, and about 58% of coulomb efficiency.

Fig. 7 shows one charge-discharge graph of the coin-shaped half cell according to comparative example 3. The coin-shaped half cell according to comparative example 3 shows 99.5 mAh/g of the initial charge capacity, 14.4 mAh/g of the initial discharge capacity, and about 14% of coulomb efficiency.

Accordingly, it is confirmed that the coin-shaped half cell according to example 2 has more remarkable initial charge capacity, initial discharge capacity and coulomb efficiency than the coin-shaped half cell according to comparative example 3.

Although preferable embodiments of the present invention are explained as above, the present invention is not limited to these embodiments, and it is possible to make a variation within the scope of the claims, detailed description and the attached drawings. Also, it is certain that this variation is also within the scope of the present invention.

Description of Reference Number

**[0128]**

100: Lithium secondary battery, 112: Anode,
114: Cathode, 113: Separator,
120: cell vessel, 140: sealing member

**Claims**

1.  A cathode active material for a lithium secondary battery, comprising:

    a core comprising a compound represented by Formula 1;
    a shell comprising a compound represented by Formula 2; and
    an interlayer, between the core and the shell, comprising a compound represented by Formula 3;
    wherein the core and the shell have different material compositions and a material composition of the interlayer is different from the material compositions of the core and the shell,
    wherein

$$Li_{x1}M1_{y1}M2_{z1}PO_{4-w1}E_{w1} \qquad [Formula\ 1]$$

$$Li_{x2}M3_{y2}M4_{z2}PO_{4-w2}E_{w2} \qquad [Formula\ 2]$$

$$Li_{x3}M5_{y3}M6_{z3}PO_{4-w3}E_{w3} \qquad [Formula\ 3]$$

    in the Formulas 1, 2 and 3,

    M1, M3 and M5 are the same material, M2, M4 and M6 are the same materials, and M5 and M6 are the same or different and each is independently selected from the group consisting of Ni, Co, Mn, Fe, Na, Mg, Ca, Ti, V, Cr, Cu, Zn, Ge, Sr, Ag, Ba, Zr, Nb, Mo, Al, Ga, B and a combination thereof,
    E is selected from the group consisting of F, S, and a combination thereof,

$$0 < x1 \le 1,\ 0 \le y1 \le 1,\ 0 \le z1 \le 1,\ and\ 0 < x1+y1+z1 \le 2,$$

$$0 \le w1 \le 0.5,$$

$$0 < x2 \le 1,\ 0 \le y2 \le 1,\ 0 \le z2 \le 1,\ and\ 0 < x2+y2+z2 \le 2,$$

$$0 \le w2 \le 0.5,$$

$$0<x3\leq1,\ 0\leq y3\leq1,\ 0\leq z3\leq1,\ \text{and}\ 0<x3+y3+z3\leq2,$$

$$0\leq w3\leq0.5,$$

and

$$x1=x2=X3,\ y1<y3<y2,\ \text{and}\ z1>z3>z2.$$

2. The cathode active material for the lithium secondary battery, as claimed in claim 1, wherein M1 and M3 are selected from the group consisting of Fe, Co, Ni, Mn, and a combination thereof, and M2 and M4 are selected from the group consisting of Mn, Ni, Co, Fe, and a combination thereof.

3. The cathode active material for the lithium secondary battery, as claimed in claim 1, wherein M1 is different from M2, the core has a structure in which in a direction away from a center of the core, a concentration of M1 increases, and a concentration of M2 decreases,
M1 is selected from the group consisting of Fe, Co, Ni, Mn, and a combination thereof, and
M2 is selected from the group consisting of Mn, Ni, Co, Fe, and a combination thereof.

4. The cathode active material for the lithium secondary battery, as claimed in claim 1, wherein the core has a diameter of 5 to $20\mu$m.

5. The cathode active material for the lithium secondary battery, as claimed in claim 1, wherein M3 is different from M4, the shell has a structure in which in a direction away from an interface between the core and the shell, a concentration of M3 increases, and a concentration of M4 decreases,
M3 is selected from the group consisting of Fe, Co, Ni, Mn, and a combination thereof, and
M4 is selected from the group consisting of Mn, Ni, Co, Fe, and a combination thereof.

6. The cathode active material for the lithium secondary battery, as claimed in claim 1, wherein the shell has a thickness of 100 nm to $5\mu$m.

7. The cathode active material for the lithium secondary battery, as claimed in claim 1, further comprising a carbon coating layer on a surface of the shell.

8. The cathode active material for the lithium secondary battery, as claimed in claim 7, wherein the carbon coating layer has a thickness of 10 nm to 200 nm.

9. The cathode active material for the lithium secondary battery, as claimed in claim 1, which has a diameter of $5\mu$m to $25\mu$m.

10. The cathode active material for the lithium secondary battery, as claimed in claim 1, which has a tap density of 1 g/cm$^3$ to 2 g/cm$^3$.

11. A method for preparing a cathode active material for a lithium secondary battery,
the method comprising the steps of:

forming a core precursor by mixing an M1 source, an M2 source, and a phosphoric acid source;
forming an interlayer precursor on the surface of the core precursor by mixing the core precursor with an M5 source, an M6 source, and a phosphoric acid source;
forming a core-shell precursor by mixing the core precursor with an M3 source, an M4 source, and a phosphoric acid source, the core-shell precursor comprising a shell precursor formed on a surface of the core precursor;
forming a core-shell composite by performing a heat treatment on the core-shell precursor by raising the temperature with a range of 1°C per minute to 10°C per minute; and
mixing the core-shell composite with a lithium source, followed by calcination,
wherein M1 and M3 are the same materials, and M2 and M4 are the same materials, and each is independently selected from the group consisting of Ni, Co, Mn, Fe, Na, Mg, Ca, Ti, V, Cr, Cu, Zn, Ge, Sr, Ag, Ba, Zr, Nb, Mo, Al, Ga, B and a combination thereof; and

wherein M5 and M6 are the same or different, and each is independently selected from the group consisting of Ni, Co, Mn, Fe, Na, Mg, Ca, Ti, V, Cr, Cu, Zn, Ge, Sr, Ag, Ba, Zr, Nb, Mo, Al, Ga, B, and a combination thereof.

12. The method as claimed in claim 11, wherein the M1 source, the M2 source, the M3 source, and the M4 source comprise sulfur oxide, nitrogen oxide, acetic oxide, hydroxide, chloride, oxalate, fluoride, carbonate, or a combination thereof of M1, M2, M3 and M4, respectively.

13. The method as claimed in claim 11, wherein the phosphoric acid source comprises phosphoric acid ($H_3PO_4$), ammonium phosphate dibasic (($NH_4$)$_2HPO_4$), ammonium phosphate trihydrate (($NH_4$)$_3PO_4 \cdot 3H_2O$)), metaphosphoric acid, orthophosphoric acid, monoammonium phosphate ($NH_4H_2PO_4$), or a combination thereof.

14. The method as claimed in claim 11, wherein the lithium source comprises lithium phosphate ($Li_3PO_4$), lithium nitrate ($LiNO_3$), lithium acetate ($LiCH_3COOH$), lithium carbonate ($Li_2CO_3$), lithium hydroxide ($LiOH$), lithium dihydrogen phosphate ($LiH_2PO_4$), or a combination thereof.

15. The method as claimed in claim 11, wherein the heat treatment is performed at a temperature ranging from 300°C to 700°C.

16. The method as claimed in claim 11, wherein the calcination is carried out at a temperature ranging from 600°C to 900°C.

17. The method of claim 16, wherein during the calcination, the temperature is raised within a range of 1°C per minute to 10°C per minute.

18. The method as claimed in claim 11, further comprising the step of forming a carbon coating layer on a surface of the core-shell composite, after the step of forming the core-shell composite.

19. A method for preparing a cathode active material for a lithium secondary battery, the method comprising the steps of:

forming a core precursor by mixing an M1 source and an M2 source;

forming an interlayer precursor on the surface of the core precursor by mixing the core precursor with an M5 source and an M6 source;

forming a core-shell precursor by mixing the core precursor with an M3 source, and an M4 source, the core-shell precursor comprising a shell precursor formed on a surface of the core precursor; and

mixing the core-shell precursor with a lithium source and a phosphoric acid source, followed by calcination, wherein M1 and M3 are the same materials, and M2 and M4 are the same materials, and each is independently selected from the group consisting of Ni, Co, Mn, Fe, Na, Mg, Ca, Ti, V, Cr, Cu,Zn, Ge, Sr, Ag, Ba, Zr, Nb, Mo, Al, Ga, B and a combination thereof; and

wherein M5, and M6 are the same or different, and each is independently selected from the group consisting of Ni, Co, Mn, Fe, Na, Mg, Ca, Ti, V, Cr, Cu, Zn, Ge, Sr, Ag, Ba, Zr, Nb, Mo, Al, Ga, B and a combination thereof.

20. The method as claimed in claim 18, further comprising the step of forming a carbon coating layer on a surface of the core-shell precursor, after the step of forming the core-shell precursor.

21. A lithium secondary battery comprising:

a cathode comprising a cathode active material;

an anode comprising an anode active material; and

an electrolyte,

wherein the cathode active material is the cathode active material for the lithium secondary battery as claimed in any one of claims 1 to 8.

**Patentansprüche**

1. Aktives Kathodenmaterial für einen Lithium-Akkumulator, umfassend:

einen Kern, der eine durch Formel 1 dargestellte Verbindung umfasst;
eine Hülle, die eine durch Formel 2 dargestellte Verbindung umfasst; und
eine Zwischenschicht zwischen dem Kern und der Hülle, die eine durch Formel 3 dargestellte Verbindung umfasst;
wobei der Kern und die Hülle unterschiedliche Materialzusammensetzungen aufweisen und sich eine Materialzusammensetzung der Zwischenschicht von der Materialzusammensetzung des Kerns und der Hülle unterscheidet,

wobei

$$Li_{x1}M1_{y1}M2_{z1}PO_{4-w1}E_{w1} \qquad \text{[Formel 1]}$$

$$Li_{x2}M3_{y2}M4_{z2}PO_{4-w2}E_{w2} \qquad \text{[Formel 2]}$$

$$Li_{x3}M5_{y3}M6_{z3}PO_{4-w3}E_{w3} \qquad \text{[Formel 3]}$$

in den Formeln 1, 2 und 3

sind M1, M3 und M5 dasselbe Material, sind M2, M4 und M6 dieselben Materialien und sind M5 und M6 gleich oder unterschiedlich und ist jedes unabhängig aus der Gruppe ausgewählt, bestehend aus Ni, Co, Mn, Fe, Na, Mg, Ca, Ti, V, Cr, Cu, Zn, Ge, Sr, Ag, Ba, Zr, Nb, Mo, Al, Ga, B und einer Kombination davon,
ist E ausgewählt aus der Gruppe, bestehend aus F, S und einer Kombination davon,

$$0 < x1 \leq 1, \ 0 \leq y1 \leq 1, \ 0 \leq z1 \leq 1 \text{ und } 0 < x1 + y1 + z1 \leq 2,$$

$$0 \leq w1 \leq 0{,}5,$$

$$0 < x2 \leq 1, \ 0 \leq y2 \leq 1, \ 0 \leq z2 \leq 1 \text{ und } 0 < x2 + y2 + z2 \leq 2,$$

$$0 \leq w2 \leq 0{,}5,$$

$$0 < x3 \leq 1, \ 0 \leq y3 \leq 1, \ 0 \leq z3 \leq 1 \text{ und } 0 < x3 + y3 + z3 \leq 2,$$

$$0 \leq w3 \leq 0{,}5$$

und

$$x1 = x2 = x3, \ y1 < y3 < y2 \text{ und } z1 > z3 > z2.$$

2. Aktives Kathodenmaterial für den Lithium-Akkumulator nach Anspruch 1, wobei M1 und M3 aus der Gruppe ausgewählt sind, bestehend aus Fe, Co, Ni, Mn und einer Kombination davon, und M2 und M4 aus der Gruppe ausgewählt sind, bestehend aus Mn, Ni, Co, Fe und einer Kombination davon.

3. Aktives Kathodenmaterial für den Lithium-Akkumulator nach Anspruch 1, wobei sich M1 von M2 unterscheidet, der Kern eine Struktur aufweist, in der in einer Richtung von einer Mitte des Kerns weg eine Konzentration von M1 zunimmt und eine Konzentration von M2 abnimmt,
M1 ausgewählt ist aus der Gruppe, bestehend aus Fe, Co, Ni, Mn und einer Kombination davon, und
M2 ausgewählt ist aus der Gruppe, bestehend aus Mn, Ni, Co, Fe und einer Kombination davon.

4. Aktives Kathodenmaterial für den Lithium-Akkumulator nach Anspruch 1, wobei der Kern einen Durchmesser von 5 bis 20 $\mu$m aufweist.

**5.** Aktives Kathodenmaterial für den Lithium-Akkumulator nach Anspruch 1, wobei sich M3 von M4 unterscheidet, die Hülle eine Struktur aufweist, in der in einer Richtung von einer Übergangsstelle zwischen dem Kern und der Hülle weg eine Konzentration von M3 zunimmt und eine Konzentration von M4 abnimmt, M3 ausgewählt ist aus der Gruppe, bestehend aus Fe, Co, Ni, Mn und einer Kombination davon, und M4 ausgewählt ist aus der Gruppe, bestehend aus Mn, Ni, Co, Fe und einer Kombination davon.

**6.** Aktives Kathodenmaterial für den Lithium-Akkumulator nach Anspruch 1, wobei die Hülle eine Dicke von 100 nm bis 5 $\mu$m aufweist.

**7.** Aktives Kathodenmaterial für den Lithium-Akkumulator nach Anspruch 1, ferner umfassend eine Kohlenstoffbeschichtungsschicht auf einer Oberfläche der Hülle.

**8.** Aktives Kathodenmaterial für den Lithium-Akkumulator nach Anspruch 7, wobei die Kohlenstoffbeschichtungsschicht eine Dicke von 10 nm bis 200 nm aufweist.

**9.** Aktives Kathodenmaterial für den Lithium-Akkumulator nach Anspruch 1, das einen Durchmesser von 5 $\mu$m bis 25 $\mu$m aufweist.

**10.** Aktives Kathodenmaterial für den Lithium-Akkumulator nach Anspruch 1, das eine Klopfdichte von 1 g/cm$^3$ bis 2 g/cm$^3$ aufweist.

**11.** Verfahren zum Herstellen eines aktiven Kathodenmaterials für einen Lithium-Akkumulator, wobei das Verfahren folgende Schritte umfasst:

Bilden eines Kernpräkursors mittels Mischen einer M1-Quelle, einer M2-Quelle und einer Phosphorsäurequelle;
Bilden eines Zwischenschichtpräkursors auf der Oberfläche des Kernpräkursors mittels Mischen des Kernpräkursors mit einer M5-Quelle, einer M6-Quelle und einer Phosphorsäurequelle;
Bilden eines Kern-Hülle-Präkursors mittels Mischen des Kernpräkursors mit einer M3-Quelle, einer M4-Quelle und einer Phosphorsäurequelle, wobei der Kern-Hülle-Präkursor einen auf einer Oberfläche des Kernpräkursors gebildeten Hüllenpräkursor umfasst;
Bilden eines Kern-Hülle-Verbundstoffs mittels Durchführen einer Wärmebehandlung an dem Kern-Hülle-Präkursor mittels Erhöhen der Temperatur in einem Bereich von 1 °C pro Minute bis 10 °C pro Minute; und
Mischen des Kern-Hülle-Verbundstoffs mit einer Lithiumquelle, gefolgt von Kalzinierung,
wobei M1 und M3 dieselben Materialien sind und M2 und M4 dieselben Materialien sind und jedes unabhängig aus der Gruppe ausgewählt ist, bestehend aus Ni, Co, Mn, Fe, Na, Mg, Ca, Ti, V, Cr, Cu, Zn, Ge, Sr, Ag, Ba, Zr, Nb, Mo, Al, Ga, B und einer Kombination davon; und
wobei M5 und M6 gleich oder unterschiedlich sind und jedes unabhängig aus der Gruppe ausgewählt ist, bestehend aus Ni, Co, Mn, Fe, Na, Mg, Ca, Ti, V, Cr, Cu, Zn, Ge, Sr, Ag, Ba, Zr, Nb, Mo, Al, Ga, B und einer Kombination davon.

**12.** Verfahren nach Anspruch 11, wobei die M1-Quelle, die M2-Quelle, die M3-Quelle und die M4-Quelle Schwefeloxid, Stickstoffoxid, Essigsäureanhydrid, Hydroxid, Chlorid, Oxalat, Fluorid, Carbonat oder eine Kombination davon von M1, M2, M3 bzw. M4 umfassen.

**13.** Verfahren nach Anspruch 11, wobei die Phosphorsäurequelle Phosphorsäure ($H_3PO_4$), Diammoniumphosphat (($NH_4$)$_2$HPO$_4$), Ammoniumphosphat-Trihydrat (($NH_4$)$_3$PO$_4\cdot$3H$_2$O)), Metaphosphorsäure, Orthophosphorsäure, Monoammoniumphosphat ($NH_4H_2PO_4$) oder eine Kombination davon umfasst.

**14.** Verfahren nach Anspruch 11, wobei die Lithiumquelle Lithiumphosphat ($Li_3PO_4$), Lithiumnitrat ($LiNO_3$), Lithiumacetat ($LiCH_3COOH$), Lithiumcarbonat ($Li_2CO_3$), Lithiumhydroxid ($LiOH$), Lithiumdihydrogenphosphat ($LiH_2PO_4$) oder eine Kombination davon umfasst.

**15.** Verfahren nach Anspruch 11, wobei die Wärmebehandlung bei einer Temperatur im Bereich von 300 °C bis 700 °C durchgeführt wird.

**16.** Verfahren nach Anspruch 11, wobei die Kalzinierung bei einer Temperatur im Bereich von 600 °C bis 900 °C durchgeführt wird.

**17.** Verfahren nach Anspruch 16 wobei während der Kalzinierung die Temperatur innerhalb eines Bereichs von 1 °C pro Minute bis 10 °C pro Minute angehoben wird.

**18.** Verfahren nach Anspruch 11, ferner umfassend den Schritt des Bildens einer Kohlenstoffbeschichtungsschicht auf einer Oberfläche des Kern-Hülle-Verbundstoffs nach dem Schritt des Bildens des Kern-Hülle-Verbundstoffs.

**19.** Verfahren zum Herstellen eines aktiven Kathodenmaterials für einen Lithium-Akkumulator, wobei das Verfahren folgende Schritte umfasst:

Bilden eines Kernpräkursors mittels Mischen einer M1-Quelle und einer M2-Quelle;
Bilden eines Zwischenschichtpräkursors auf der Oberfläche des Kernpräkursors mittels Mischen des Kernpräkursors mit einer M5-Quelle und einer M6-Quelle;
Bilden eines Kern-Hülle-Präkursors mittels Mischen des Kernpräkursors mit einer M3-Quelle und einer M4-Quelle, wobei der Kern-Hülle-Präkursor einen auf einer Oberfläche des Kernpräkursors gebildeten Hüllenpräkursor umfasst; und
Mischen des Kern-Hülle-Präkursors mit einer Lithiumquelle und einer Phosphorsäurequelle, gefolgt von Kalzinierung,
wobei M1 und M3 dieselben Materialien sind und M2 und M4 dieselben Materialien sind und jedes unabhängig aus der Gruppe ausgewählt ist, bestehend aus Ni, Co, Mn, Fe, Na, Mg, Ca, Ti, V, Cr, Cu, Zn, Ge, Sr, Ag, Ba, Zr, Nb, Mo, Al, Ga, B und einer Kombination davon; und
wobei M5 und M6 gleich oder unterschiedlich sind und jedes unabhängig aus der Gruppe ausgewählt ist, bestehend aus Ni, Co, Mn, Fe, Na, Mg, Ca, Ti, V, Cr, Cu, Zn, Ge, Sr, Ag, Ba, Zr, Nb, Mo, Al, Ga, B und einer Kombination davon.

**20.** Verfahren nach Anspruch 18, ferner umfassend den Schritt des Bildens einer Kohlenstoffbeschichtungsschicht auf einer Oberfläche des Kern-Hülle-Präkursors nach dem Schritt des Bildens des Kern-Hülle-Präkursors.

**21.** Lithium-Akkumulator, umfassend:

eine Kathode, die ein aktives Kathodenmaterial umfasst;
eine Anode, die ein aktives Anodenmaterial umfasst; und
einen Elektrolyten,
wobei das aktive Kathodenmaterial das aktive Kathodenmaterial für den Lithium-Akkumulator nach einem der Ansprüche 1 bis 8 ist.

**Revendications**

**1.** Matière active de cathode pour batterie secondaire au lithium, comprenant :

un coeur comprenant un composé représenté par la Formule 1 ;
une enveloppe comprenant un composé représenté par la Formule 2 ; et
une couche intermédiaire, entre le coeur et l'enveloppe, comprenant un composé représenté par la Formule 3 ;
le coeur et l'enveloppe ayant des compositions de matière différentes et une composition de matière de la couche intermédiaire étant différente des compositions de matière du coeur et de l'enveloppe,

où

$$Li_{x1}M1_{y1}M2_{z1}PO_{4-w1}E_{w1} \quad \text{[Formule 1]}$$

$$Li_{x2}M3_{y2}M4_{z2}PO_{4-w2}E_{w2} \quad \text{[Formule 2]}$$

$$Li_{x3}M5_{y3}M6_{z3}PO_{4-w3}E_{w3} \quad \text{[Formule 3]}$$

dans les Formules 1, 2 et 3,

M1, M3 et M5 sont de la même matière, M2, M4 et M6 sont des mêmes matières, et M5 et M6 sont identiques ou différents et chacun est indépendamment choisi dans le groupe constitué par Ni, Co, Mn, Fe, Na, Mg, Ca, Ti, V, Cr, Cu, Zn, Ge, Sr, Ag, Ba, Zr, Nb, Mo, Al, Ga, B et une de leurs combinaisons,

E est choisi dans le groupe constitué par F, S et une de leurs combinaisons,

$$0<x1\leq1,\ 0\leq y1\leq1,\ 0\leq z1\leq1\ et\ 0<x1+y1+z1\leq2,$$

$$0\leq w1\leq0,5,$$

$$0<x2\leq1,\ 0\leq y2\leq1,\ 0\leq z2\leq1\ et\ 0<x2+y2+z2\leq2,$$

$$0\leq w2\leq0,5,$$

$$0<x3\leq1,\ 0\leq y3\leq1,\ 0\leq z3\leq1\ et\ 0<x3+y3+z3\leq2,$$

$$0\leq w3\leq0,5,$$

et

$$x1=x2=x3,\ y1<y3<y2\ et\ z1>z3>z2.$$

2. Matière active de cathode pour batterie secondaire au lithium, telle que revendiquée dans la revendication 1, où M1 et M3 sont choisis dans le groupe constitué par Fe, Co, Ni, Mn et une de leurs combinaisons, et M2 et M4 sont choisis dans le groupe constitué par Mn, Ni, Co, Fe et une de leurs combinaisons.

3. Matière active de cathode pour batterie secondaire au lithium, telle que revendiquée dans la revendication 1, où M1 est différent de M2,
le coeur présente une structure dans laquelle, dans une direction en éloignement d'un centre du coeur, une concentration en M1 augmente et une concentration en M2 diminue,
M1 est choisi dans le groupe constitué par Fe, Co, Ni, Mn et une de leurs combinaisons, et
M2 est choisi dans le groupe constitué par Mn, Ni, Co, Fe et une de leurs combinaisons.

4. Matière active de cathode pour batterie secondaire au lithium, telle que revendiquée dans la revendication 1, où le coeur a un diamètre de 5 à 20 $\mu$m.

5. Matière active de cathode pour batterie secondaire au lithium, telle que revendiquée dans la revendication 1, où M3 est différent de M4,
l'enveloppe présente une structure dans laquelle, dans une direction en éloignement d'une interface entre le coeur et l'enveloppe, une concentration en M3 augmente et une concentration en M4 diminue,
M3 est choisi dans le groupe constitué par Fe, Co, Ni, Mn et une de leurs combinaisons, et
M4 est choisi dans le groupe constitué par Mn, Ni, Co, Fe et une de leurs combinaisons.

6. Matière active de cathode pour batterie secondaire au lithium, telle que revendiquée dans la revendication 1, où l'enveloppe a une épaisseur de 100 nm à 5 $\mu$m.

7. Matière active de cathode pour batterie secondaire au lithium, telle que revendiquée dans la revendication 1, comprenant en outre une couche de revêtement au carbone sur une surface de l'enveloppe.

8. Matière active de cathode pour batterie secondaire au lithium, telle que revendiquée dans la revendication 7, où la couche de revêtement au carbone a une épaisseur de 10 nm à 200 nm.

9. Matière active de cathode pour batterie secondaire au lithium, telle que revendiquée dans la revendication 1, qui présente un diamètre de 5 $\mu$m à 25 $\mu$m.

**10.** Matière active de cathode pour batterie secondaire au lithium, telle que revendiquée dans la revendication 1, qui présente une masse volumique tassée de 1 g/cm$^3$ à 2 g/cm$^3$.

**11.** Procédé de préparation d'une matière active de cathode pour batterie secondaire au lithium, le procédé comprenant les étapes consistant à :

> former un précurseur de coeur en mélangeant une source de M1, une source de M2 et une source d'acide phosphorique ;
> former un précurseur de couche intermédiaire sur la surface du précurseur de coeur en mélangeant le précurseur de coeur avec une source de M5, une source de M6 et une source d'acide phosphorique ;
> former un précurseur de coeur-enveloppe en mélangeant le précurseur de coeur avec une source de M3, une source de M4 et une source d'acide phosphorique, le précurseur de coeur-enveloppe comprenant un précurseur d'enveloppe formé sur une surface du précurseur de coeur ;
> former un composite de coeur-enveloppe en effectuant un traitement thermique sur le précurseur de coeur-enveloppe par une élévation de la température avec une plage de 1 °C par minute à 10 °C par minute ; et
> mélanger le composite de coeur-enveloppe avec une source de lithium, avant d'effectuer une calcination, M1 et M3 étant les même matières et M2 et M4 étant les mêmes matières, et chacun étant indépendamment choisi dans le groupe constitué par Ni, Co, Mn, Fe, Na, Mg, Ca, Ti, V, Cr, Cu, Zn, Ge, Sr, Ag, Ba, Zr, Nb, Mo, Al, Ga, B et une de leurs combinaisons ; et
> M5 et M6 étant identiques ou différents, et chacun étant indépendamment choisi dans le groupe constitué par Ni, Co, Mn, Fe, Na, Mg, Ca, Ti, V, Cr, Cu, Zn, Ge, Sr, Ag, Ba, Zr, Nb, Mo, Al, Ga, B et une de leurs combinaisons.

**12.** Procédé tel que revendiqué dans la revendication 11, où la source de M1, la source de M2, la source de M3 et la source de M4 comprennent de l'oxyde de soufre, de l'oxyde d'azote, de l'oxyde acétique, de l'hydroxyde, du chlorure, de l'oxalate, du fluorure, du carbonate ou une de leurs combinaisons de M1, M2, M3 et M4, respectivement.

**13.** Procédé tel que revendiqué dans la revendication 11, où la source d'acide phosphorique comprend de l'acide phosphorique ($H_3PO_4$), du phosphate d'ammonium dibasique (($NH_4)_2HPO_4$), du phosphate d'ammonium trihydraté (($NH_4)_3PO_4 \cdot _3H_2O$)), de l'acide métaphosphorique, de l'acide orthophosphorique, du monophosphate d'ammonium ($NH_4H_2PO_4$) ou une de leurs combinaisons.

**14.** Procédé tel que revendiqué dans la revendication 11, où la source de lithium comprend du phosphate de lithium ($Li_3PO_4$), du nitrate de lithium ($LiNO_3$), de l'acétate de lithium ($LiCH_3COOH$), du carbonate de lithium ($Li_2CO_3$), de l'hydroxyde de lithium (LiOH), du dihydrogénophosphate de lithium ($LiH_2PO_4$) ou une de leurs combinaisons.

**15.** Procédé tel que revendiqué dans la revendication 11, où le traitement thermique est effectué à une température dans la plage de 300 °C à 700 °C.

**16.** Procédé tel que revendiqué dans la revendication 11, où la calcination est réalisée à une température dans la plage de 600 °C à 900 °C.

**17.** Procédé de la revendication 16, où pendant la calcination, la température est élevée dans une plage de 1 °C par minute à 10 °C par minute.

**18.** Procédé tel que revendiqué dans la revendication 11, comprenant en outre l'étape consistant à former une couche de revêtement au carbone sur une surface du composite de coeur-enveloppe, après l'étape consistant à former le composite de coeur-enveloppe.

**19.** Procédé de préparation d'une matière active de cathode pour batterie secondaire au lithium, le procédé comprenant les étapes consistant à :

> former un précurseur de coeur en mélangeant une source de M1 et une source de M2 ;
> former un précurseur de couche intermédiaire sur la surface du précurseur de coeur en mélangeant le précurseur de coeur avec une source de M5 et une source de M6 ;
> former un précurseur de coeur-enveloppe en mélangeant le précurseur de coeur avec une source de M3 et une source de M4, le précurseur de coeur-enveloppe comprenant un précurseur d'enveloppe formé sur une surface du précurseur de coeur ; et
> mélanger le précurseur de coeur-enveloppe avec une source de lithium et une source d'acide phosphorique, avant d'effectuer une calcination,

M1 et M3 étant les même matières et M2 et M4 étant les mêmes matières, et chacun étant indépendamment choisi dans le groupe constitué par Ni, Co, Mn, Fe, Na, Mg, Ca, Ti, V, Cr, Cu, Zn, Ge, Sr, Ag, Ba, Zr, Nb, Mo, Al, Ga, B et une de leurs combinaisons ; et

M5 et M6 étant identiques ou différents, et chacun étant indépendamment choisi dans le groupe constitué par Ni, Co, Mn, Fe, Na, Mg, Ca, Ti, V, Cr, Cu, Zn, Ge, Sr, Ag, Ba, Zr, Nb, Mo, Al, Ga, B et une de leurs combinaisons.

**20.** Procédé tel que revendiqué dans la revendication 18, comprenant en outre l'étape consistant à former une couche de revêtement au carbone sur une surface du précurseur de coeur-enveloppe, après l'étape consistant à former le précurseur de coeur-enveloppe.

**21.** Batterie secondaire au lithium comprenant :

une cathode comprenant une matière active de cathode ;
une anode comprenant une matière active d'anode ; et
un électrolyte,

la matière active de cathode étant la matière active de cathode pour batterie secondaire au lithium telle que revendiquée dans l'une quelconque des revendications 1 à 8.

[Fig. 1]

[Fig. 2]

[Fig. 3a]

[Fig. 3b]

[Fig. 4]

[Fig. 5a]

[Fig. 5b]

[Fig. 6]

[Fig. 7]

**EP 2 792 006 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110269023 A
- WO 2011032264 A
- EP 2360119 A